# EUROPEAN PATENT SPECIFICATION

(11) **EP 3 048 235 B1**
(45) Date of publication and mention of the grant of the patent: **01.11.2017**
(21) Application number: 15198712.0
(22) Date of filing: 09.12.2015
(51) Int. Cl.: E06B 9/24, G09F 5/04, G09B 25/00, A47F 7/16

(54) **SAMPLE DECK DISPLAY SYSTEM**
PROBENSTAPELANZEIGESYSTEM
SYSTÈME D'AFFICHAGE DU POSTE D'ÉCHANTILLON

(30) Priority: 09.12.2014 US 201462089709 P
(43) Date of publication of application: 27.07.2016
(73) Proprietor: Hunter Douglas Inc., Pearl River, New York 10965 (US)
(72) Inventor: LUKON, Jessica, Pearl River, NY 10965 (US); CHURCH, Coty, Westminster, CO 80234 (US); LARSON, Laura, Lafayette, CO 80026 (US); MORRIS, Sarah, Westminster, CO 80031 (US); MUSSELWHITE, Dan, Thornton, CO 80233 (US); SPRAY, Jeffrey L., Erie, CO 80516 (US); WISECUP, Sheryl, Niwot, CO 80504 (US); WOZNY, Kristen, Erie, CO 80516 (US); HATMAKER, Natalie, Thornton, CO 80241 (US); WOLKEN, Linnea, Broomfield, CO 80023 (US)
(74) Representative: J A Kemp

(56) References cited:
- CA-A1- 2 622 936
- GB-A- 2 358 511
- US-A- 3 714 725
- US-B1- 6 503 188

## Description

### FIELD

The present disclosure relates generally to displays for coverings for architectural openings, and more particularly to a sample deck display system for use in viewing at least one sample of an architectural covering.

### BACKGROUND

CA 2 622 936 A describes a blind display comprising a frame; a display opening in the frame; a series of display panel supporting members; and a series of display panels supported by the series of display panel supporting members. At least some of the display panels from the series of display panels are adapted to receive a display sample adapted to display a blind sample. At least some of the display panels from the series of display panels are displaceably, e.g. slidably mounted to the series of display panel supporting members and being visible through the display opening. A method for displaying blind samples and a kit are equally disclosed.
US 3,714,725 describes a device for displaying sheet members having indicia thereon comprising a support frame and an elongated spindle rotatably mounted in the support frame for rotation about a horizontal axis. A plurality of sheet members having indicia thereon are rolled into cylinders and are detachably mounted to the spindle. Complementary brackets are provided on the spindle and on each cylinder for detachably holding the cylinders to the spindle.
Coverings for architectural openings, such as windows, doors, archways, and the like, have taken numerous forms for many years. Sample books typically are used to help a user choose between the many forms of coverings, including color and fabric options. The sample books generally include multiple pages of sample decks of different types of coverings. Each sample deck generally includes several sample swatches of different coverings for the consumer to view. Typically, the swatches are oriented in a manner that is not conducive to comparing one sample swatch to another at the same time. This is a significant inconvenience to the user.

### SUMMARY

Embodiments of the present disclosure may include a sample deck including samples of coverings for an architectural opening (simply "coverings" hereinafter, for the sake of convenience without intent to limit), each covering sample including a portion or representative section of shade structure arranged to expand and collapse for quick comparison of multiple covering samples in the same environment. For instance, each covering sample may be extended into a position representative of a use position as installed, such as in an architectural opening. In some embodiments, the covering samples may be separately expandable and/or collapsible to selectively open and/or collapse and may be arranged side-by-side along a length dimension of the sample deck for side-by-side comparison of the covering samples.
According to the present invention, there may be provided a sample deck as defined in appended claim 1.
The shade structure may comprise a cellular structure.
The cellular structure may comprise multiple cellular rows attached to one another along top and bottom sides.
Each cellular row may include at least one cell having a hexagonal cross-sectional shape. Each cellular row may include an outer cell and an inner cell disposed within said outer cell.
The shade structure may be pleated.

Embodiments of the present disclosure may include a device for displaying multiple covering samples within an architectural opening. In some embodiments, the device includes a support structure, a bracket associated with an upper portion of the support structure for supporting the sample deck, and an extension feature associated with a lower portion of the support structure for retaining one or more covering samples in an extended position.

Embodiments of the disclosure may include a method of displaying multiple covering samples. In some embodiments, the method includes coupling a sample deck to a bracket, positioning the bracket within an architectural opening, extending one or more covering samples to an extended position, and retaining the one or more covering samples in the extended position with an extension feature so that a user can view and/or compare the multiple covering samples in a setting similar to an ultimate setting.
The method may further comprise coupling the sample deck to a bracket.
The method may further comprise unfolding the bracket prior to coupling the sample deck to the bracket.
The coupling the sample deck to the bracket may comprise resting the sample deck on a support surface of the bracket.
The coupling the sample deck to the bracket may comprise attaching the sample deck to a lower surface of the bracket.
The method extending one or more covering samples into the extended position may comprise extending the one or more covering samples through one or more apertures formed in the bracket. The method may further comprise retaining one or more covering samples in the extended position with an extension feature.
The retaining the one or more covering samples in the extended position may comprise inserting a cover member attached to the one or more covering samples through a slit formed in a support structure attached to the bracket.
The retaining the one or more covering samples in the extended position may comprise applying a downward force on the one or more covering samples with a biasing element attached to a lowermost cell of the one or more covering samples.
The retaining the one or more covering samples in the extended position may comprise magnetically securing a portion of the one or more covering samples to a magnetic material associated with a support structure attached to the bracket.

This summary of the disclosure is given to aid understanding, and one of skill in the art will understand that each of the various aspects and features of the disclosure may advantageously be used separately in some instances, or in combination with other aspects and features of the disclosure in other instances. Accordingly, while the disclosure is presented in terms of embodiments, it should be appreciated that individual aspects of any embodiment can be claimed separately or in combination with aspects and features of that embodiment or any other embodiment.

The present disclosure is set forth in various levels of detail in this application and no limitation as to the scope of the claimed subject matter is intended by either the inclusion or non-inclusion of elements, components, or the like in this summary. In certain instances, details that are not necessary for an understanding of the disclosure or that render other details difficult to perceive may have been omitted. It should be understood that the claimed subject matter is not necessarily limited to the particular embodiments or arrangements illustrated herein.

### BRIEF DESCRIPTION OF THE DRAWINGS

The accompanying drawings, which are incorporated into and constitute a part of the specification, illustrate embodiments of the disclosure and, together with the general description given above and the detailed description given below, serve to explain the principles of these embodiments.
FIG. 1 is an isometric view of multiple pages of a sample book in accordance with some embodiments of the present disclosure.
FIG. 2 is a front isometric view of a sample deck including multiple covering samples in accordance with some embodiments of the present disclosure.
FIG. 3 is a rear isometric view of the sample deck of FIG. 2 in accordance with some embodiments of the present disclosure.
FIG. 4 is a top plan view of the sample deck of FIG. 2 in accordance with some embodiments of the present disclosure.
FIG. 5 is an isometric view of the sample deck of FIG. 2 positioned in front of a window in accordance with some embodiments of the present disclosure.
FIG. 6 is a front elevation view of a first device for displaying multiple covering samples in accordance with some embodiments of the present disclosure.
FIG. 7A is a side elevation view of the device of FIG. 6 in accordance with some embodiments of the present disclosure.
FIG. 7B is an enlarged, fragmentary side elevation view of a sample deck supported by a bracket of the device of FIG. 6 in accordance with some embodiments of the present disclosure.
FIG. 8A is a front isometric view of a bracket of the device of FIG. 6 in accordance with some embodiments of the present disclosure.
FIG. 8B is a lengthwise cross-sectional view of a sample deck supported by the bracket of FIG. 8A taken along line 8B-8B of FIG. 7A in accordance with some embodiments of the present disclosure.
FIG. 9 is a front elevation view of a second device for displaying multiple covering samples in accordance with some embodiments of the present disclosure.
FIG. 10A is a front isometric view of a bracket of the device of FIG. 9 in accordance with some embodiments of the present disclosure.
FIG. 10B is a fragmentary, side elevation view of a sample deck attached to the device of FIG. 9 in accordance with some embodiments of the present disclosure.
FIG. 11 is a front elevation view of a third device for displaying multiple covering samples in accordance with some embodiments of the present disclosure.
FIG. 12 is a fragmentary, cross-sectional view of a portion of a covering sample attached to the device of FIG. 11 taken along line 12-12 of FIG. 11 in accordance with some embodiments of the present disclosure.
FIG. 13 is a side elevation view of a sample deck with a retention feature in accordance with some embodiments of the present disclosure.
FIG. 14 is a lengthwise cross-sectional view of the sample deck of FIG. 13 taken along line 14-14 of FIG. 13 in accordance with some embodiments of the present disclosure.

### DETAILED DESCRIPTION

The present disclosure provides a sample deck having multiple covering samples, such as a sample that is a substantially accurate model of a covering for an architectural opening, to view and assess the features of the covering samples in an architectural opening, such as a window. In an illustrative embodiment, the deck is configured to allow a user to compare characteristics, such as color and fabric, of different types of covering samples concurrently. The covering samples may be compared in an environment which is at least representative of the ultimate environment in which the full-sized covering is to be used or installed. The covering samples may be formed in a variety of constructions, such as a cellular construction (e.g., a honeycomb-shaped construction) that is collapsible into a closed configuration adjacent a substrate of the deck and is expandable into an extended or open configuration oriented substantially perpendicular to the substrate. The covering samples may be arranged side-by-side (e.g., in a single row) along a length dimension of the substrate. The side-by-side arrangement may allow a user to position the deck near an architectural opening and simultaneously or not simultaneously compare the covering samples, including each of their overall appearance, translucence, texture, or other qualities of appearance based on their expanded structure and materials, to one another in an environment mimicking the environment in which an associated covering (as represented by one or more of the covering samples) would ultimately be placed.

The present disclosure also provides a display device enabling users to see different covering samples adjacent one another (e.g., in a side-by-side arrangement), which allows for effective comparison. The display device enables viewing of multiple covering samples having different characteristics adjacent an architectural opening, such as a window opening, without a user holding or supporting the display device or the covering samples. The display device generally improves the overall experience and allows users to compare the differences (in appearance and structure, for instance) between the covering samples in the same environment and at the same time, if desired. The covering samples may be oriented so that when opened, the user sees the interior-facing surfaces (in contrast with the exterior, window-facing surfaces) of the covering samples similar to a covering that is installed in an architectural opening.

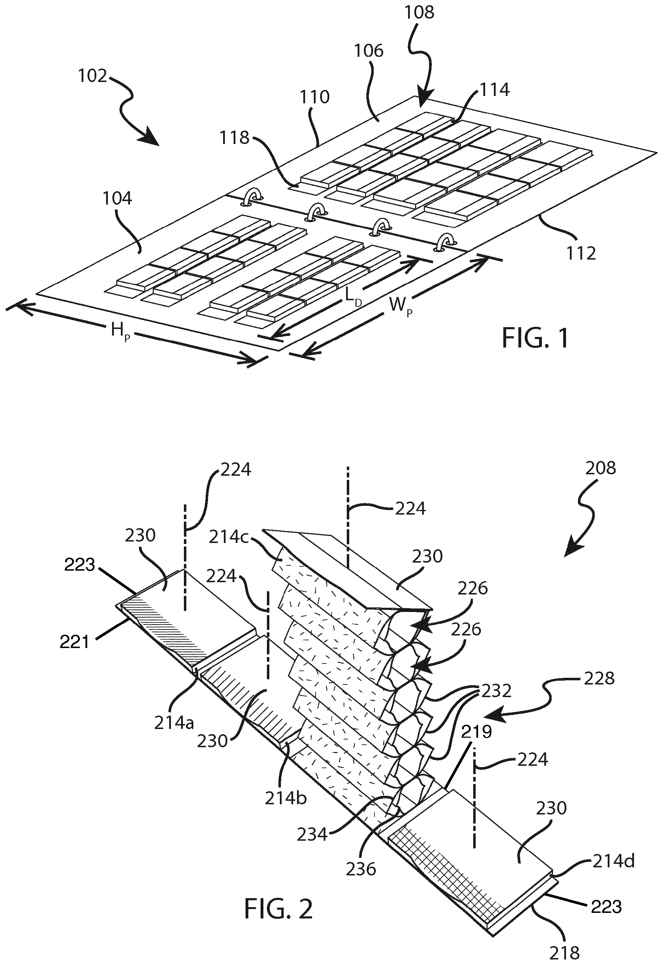

Referring to FIG. 1, a portion of a sample book 102 is depicted. Specifically, a first page 104 and a second page 106 of the sample book 102 are shown. It should be understood the sample book 102 may contain numerous pages and only the first and second pages 104, 106 are shown here for illustrative purposes only.

Referring still to FIG. 1, the first and second pages 104, 106 of the sample book 102 each include multiple decks 108. The decks 108 may be oriented horizontally across the first and second pages 104, 106 with a length dimension L_{D} of the decks 108 extending along a width dimension W_{P} of the first and second pages 104, 106. The decks 108 may be oriented substantially parallel (for example, parallel or within 10 degrees of parallel) to the top and bottom edges 110, 112 of the first and second pages 104, 106. The decks 108 may be spaced vertically apart from one another along a height dimension H_{P} of the first and second pages 104, 106. The decks 108 may be spaced at inconsistent intervals from one another as shown on the first page 104 or may be spaced at consistent intervals from one another as shown on the second page 106. In some embodiments, the decks 108 may not be spaced apart and each of the decks may abut against an adjacent deck. It will be appreciated that the decks 108 may be arranged on the first and second pages 104, 106 in any desired manner other than as shown in the illustrated embodiments.

With continued reference to FIG. 1, each deck 108 may include multiple (e.g., a plurality of) covering samples 114. The covering samples 114 may be arranged side-by-side along the length of the deck, which extends along the width dimension W_{P} of the first and second pages 104, 106. Each deck 108 in FIG. 1 includes four covering samples 114, but in other embodiments the deck 108 may include more or fewer than four covering samples 114. In some embodiments, the number of covering samples 114 may vary between different decks 108 on the same page in the sample book 102. For ease of understanding, a base reference numeral (for example, 114) will be used throughout this description when referring generally to the covering samples. A suffix (for example, a, b, c, d) will be added to the base reference numeral (for example, 114) when referring to a specific covering sample.

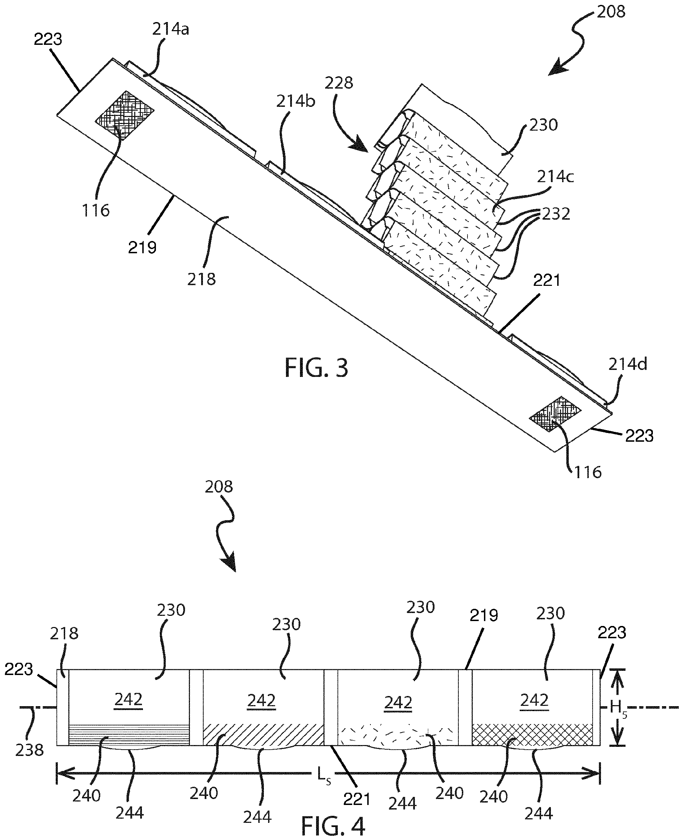

Referring still to FIG. 1, the decks 108 may be removably attached to a page of the sample book 102. Referring to FIG. 3, an attachment feature 116 may be attached to the deck 108 for attaching the deck 108 to a page of the sample book 102. In some embodiments, the attachment feature 116 is a hook and loop fastener, with either the hook or loop component attached to a substrate 118 of the deck 108 and the other of the hook or loop component attached to a respective page of the sample book 102. In this fashion, the deck 108 may be removed from the sample book 102 for closer inspection by the user and subsequently attached to the sample book 102. In some embodiments, simple mechanical fasteners, removable adhesives, or other types of fasteners may be utilized to attach the decks 108 to the sample book 102.

Referring to FIGS. 2-4, a deck 208 may include a planar substrate 218 defined by opposing front and back edges 219, 221 and opposing side edges 223. The substrate 218 may be formed from a strip of material in substantially any desirable configuration, such as an elliptical or polygonal (e.g., rectangular) shape. Referring to FIG. 4, the substrate 218 may include a height dimension Hs between the opposing front and back edges 219, 221 and a length dimension Ls between the opposing side edges 223. In some embodiments, the length dimension Ls may be larger than the height dimension Hs. In some embodiments, the height dimension Hs is between about 1.875 inches and about 3.25 inches. In some embodiments, the length dimension Ls is about 11.75 inches. The substrate 218 may be made from various types of materials, such as cardstock-weight paper, plastic, or other suitable materials to provide a backing for covering samples 214 attached to the substrate 218. The substrate 218 may be sufficiently rigid such that the substrate 218 is not foldable without creasing the substrate 218. Each deck may define top and bottom faces.

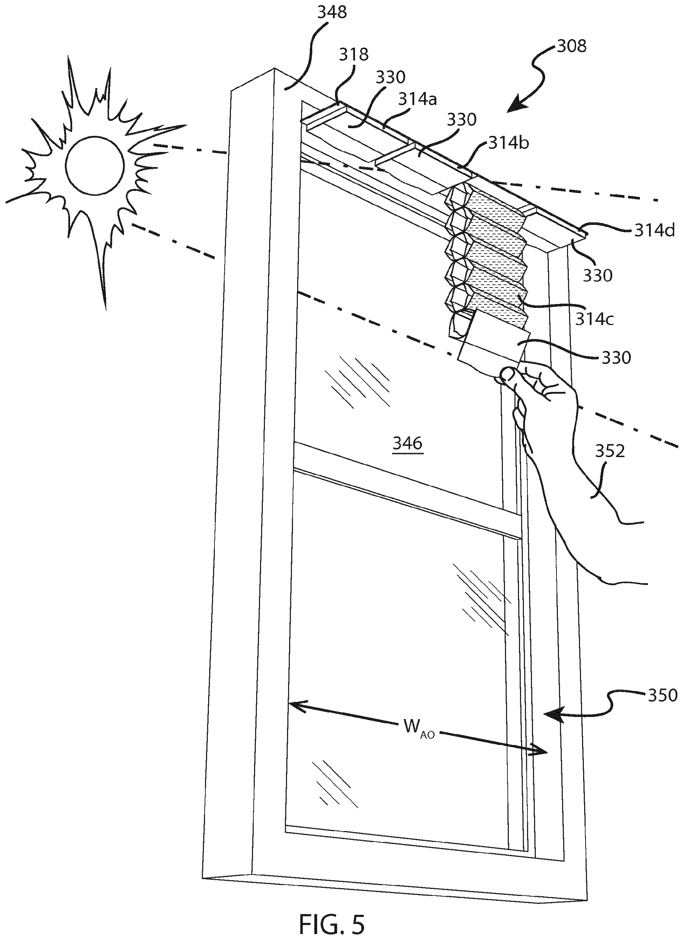

Multiple covering samples 214 may be attached to the substrate 218 and arranged side-by-side in a single row (e.g., end-to-end) for side-by-side extension of the covering samples 214 and side-by-side viewing of the front surfaces of the covering samples 214 in an environment in which a covering represented by one or more of the covering samples 214 is to be placed. For example, with reference to FIGS. 2-4, the covering samples 214 may be arranged side-by-side such that the front surfaces of the covering samples 214 extend along the length dimension Ls of the substrate 218. Referring to FIG. 5, arranging the covering samples 314 side-by-side on the substrate 318 allows the user to view the covering samples 314 next to one another in an environment mimicking the environment in which a covering (as represented by one or more of the covering samples 314) would ultimately be placed, such as in front of a window, to help the user choose between the many different covering samples 314, which may include different fabrics, colors, opacities, or other material and/or functional characteristics. For example, the front surface of each of the covering samples 314 may present a feature, such as color or texture, different from an adjacent covering sample 314.

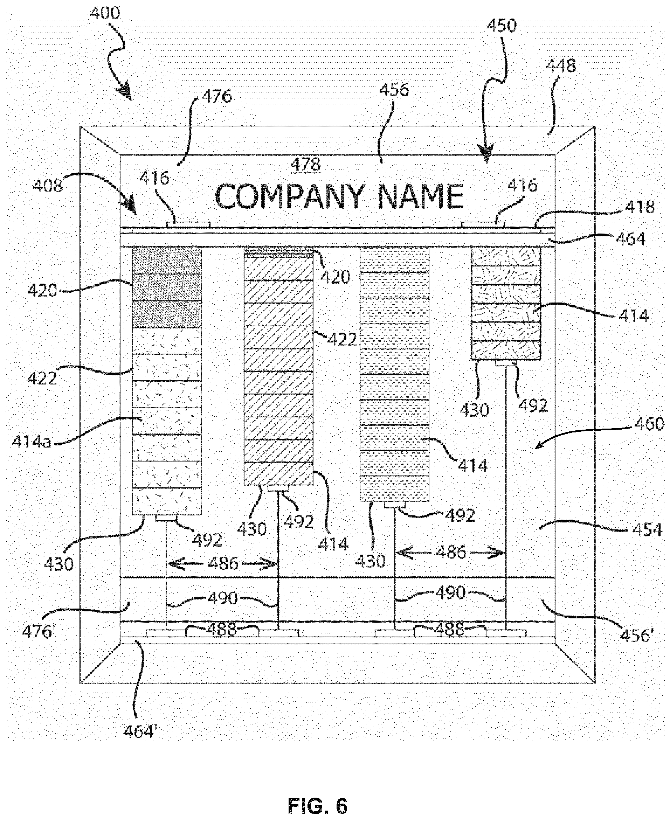

Referring back to FIGS. 2-4, the covering samples 214 may be formed from substantially any type of material. For example, the covering samples 214 may be natural and/or synthetic materials, including fabrics, polymers, and/or other suitable materials. Fabric materials may include woven, non-woven, knits, or other suitable fabric types. The covering samples 214 may have any suitable level of light transmissivity. For example, the covering samples 214 may be transparent, translucent, and/or opaque to provide the user with many different options. In some embodiments, the covering samples 214 include a layer of material with zero light transmissivity, often referred to as a black-out material. In some embodiments, a single covering sample 214 may include mixed opacities. For example, a first portion of a single covering sample 214 may include a material with a first opacity and a second portion of the single covering sample 214 may include a material with a second opacity different than the first opacity. Referring to FIG. 6, an upper portion 420 of a first covering sample 414a is opaque and a lower portion 422 of the first covering sample 414b is less opaque than the upper portion 420, thereby presenting the user with mixed opacities within the single covering sample 414a.

In some embodiments, each covering sample 214 may mimic the action and appearance of the architectural covering the covering sample 214 represents. For instance, referring to FIGS. 2 and 3, each covering sample 214 may expand and/or collapse similar to a covering having a cellular structure. In such embodiments, each covering sample 214 may be arranged to expand or extend away from the substrate 218 for viewing, and may collapse towards the substrate 218 for storage. In one example, the covering sample 214 may expand and collapse along a vector 224 oriented transverse to (for example, perpendicular or within 10 degrees of perpendicular) the substrate 218. Each covering sample 214 may be independently movable between a collapsed or closed-cell position (see covering samples 214a, 214b, 214d in FIGS. 2 and 3) and an expanded or open-cell position (see covering sample 214c in FIGS. 2 and 3). In some embodiments, two or more covering samples are moved together between collapsed and expanded positions. When the covering samples 214 are in the expanded or open-cell positions, the covering samples 214 may define a stack of open-ended internal cavities 226 extending lengthwise along the length dimension Ls of the substrate 218. When multiple covering samples 214 are extended, the internal cavities 226 of the extended covering samples 214 may be aligned with one another along the length dimension Ls of the substrate 218. When one or more covering samples 214 are expanded, the front surfaces of the covering samples 214 are seen from the same perspective as a covering would be seen when positioned over an architectural opening. Any two or more covering samples 214 can be expanded for a meaningful comparison without one covering sample blocking the view of the other covering sample. In other words, the covering samples 214 are arranged side-by-side on the substrate 218, rather than arranged one covering sample behind another covering sample.

The covering samples 214 may be formed as a shade structure arranged to expand and collapse along respective vectors 224 oriented transverse to, e.g., substantially perpendicular to, the substrate 218. A respective covering sample 214 may be extended along a respective vector 224 away from the substrate 218 to a fully expanded position for viewing by the user, and subsequently the respective covering sample 214 may be collapsed along the respective vector 224 toward the substrate 218 for storage. The shade structure may be a cellular structure 228 or other suitable structure. In some embodiments, the structure 228 may be pleated to permit the shade structure to collapse into a relatively small stack between a cover member 230 and the substrate 218. In such embodiments, the shade structure may include a pleat size of about 0.75 inches, about 1.25 inches, about 1.5 inches, or other suitable pleat sizes. The cellular structure 228 may include cellular rows 232 attached to one another along top and bottom sides. The cellular rows 232 may collapse or expand along the vector 224 oriented transverse to, e.g., substantially perpendicular to, the substrate 218. Each cellular row 232 may include at least one cell having a polygonal cross-sectional shape, such as a hexagonal cross-sectional shape. Each cellular row 232 may include a single cell, a double cell (for example, an outer cell 234 and an inner cell 236 disposed within the outer cell 234), a triple cell (for example, an outer cell, an inner cell disposed within the outer cell, and an intermediate cell positioned between the outer and inner cells), or other cellular configurations. Referring to FIGS. 3 and 4, a longitudinal axis 238 of each cellular row 232 may extend substantially parallel to the length dimension of the substrate 218.

Each covering sample 214 may be positioned between the substrate 218 and a cover member 230 that identifies the respective covering sample 214a, 214b, 214c, 214d. Referring to FIG. 4, each cover member 230 defines an upper surface which may include a first region 240 that displays a pattern of the respective covering sample and a second region 242 that includes identifying indicia, such as a color name and fabric code. The first region 240 may be transparent such that when the covering sample 214 positioned beneath the cover member 230 is in the collapsed position, a portion of the respective covering sample 214 is visible through the first region 240 of the cover member 230. The cover member 230 may include a tab 244 that allows a user to grasp the tab 244 and pull the cover member 230 away from the substrate 218 along the vector 224 to expand or open the covering sample 214.

Referring to FIG. 5, a deck 308 may be positioned in front of an architectural member 346 (such as a window 346), which is positioned within a building structure 348 (such as a window frame) defining an architectural opening 350 (such as a window opening). The deck 308 is oriented such that the covering samples 314 are positioned side-by-side along a width dimension W_{AO} of the architectural opening. In FIG. 5, the third covering sample 314c is in an expanded configuration and held in that configuration by a user or dealer 352 grasping the cover member 330 to retain the third covering sample 314c in the expanded configuration. In this configuration, light may pass through the architectural opening and shine on the third covering sample 314c to provide the user with a realistic backlit environment to assist the user in selecting the material for a covering, such as a window treatment.

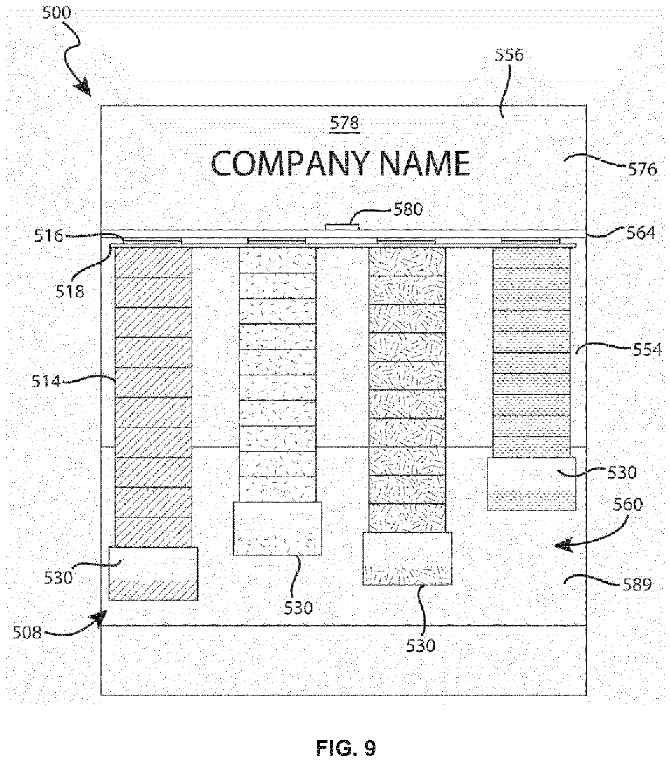

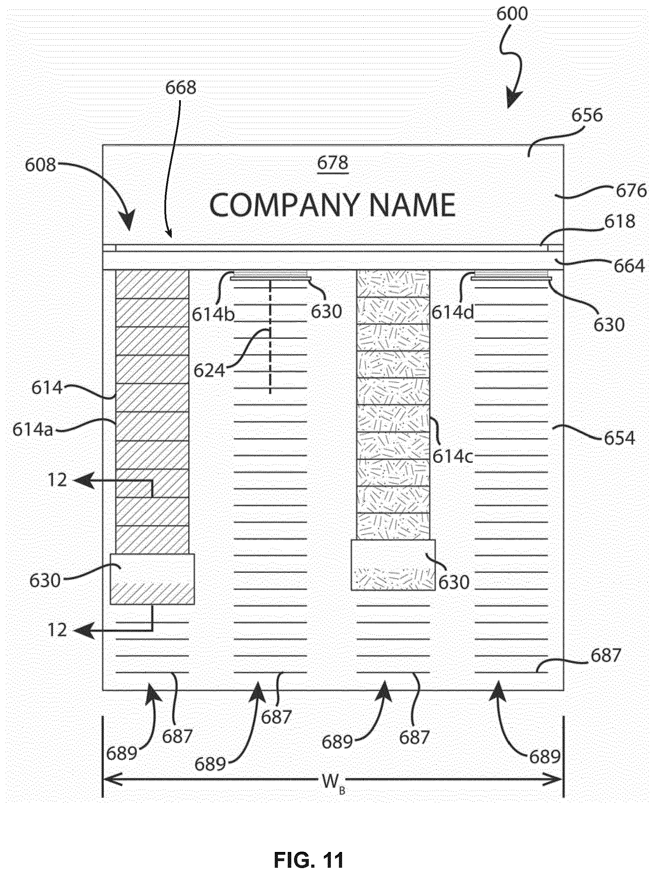

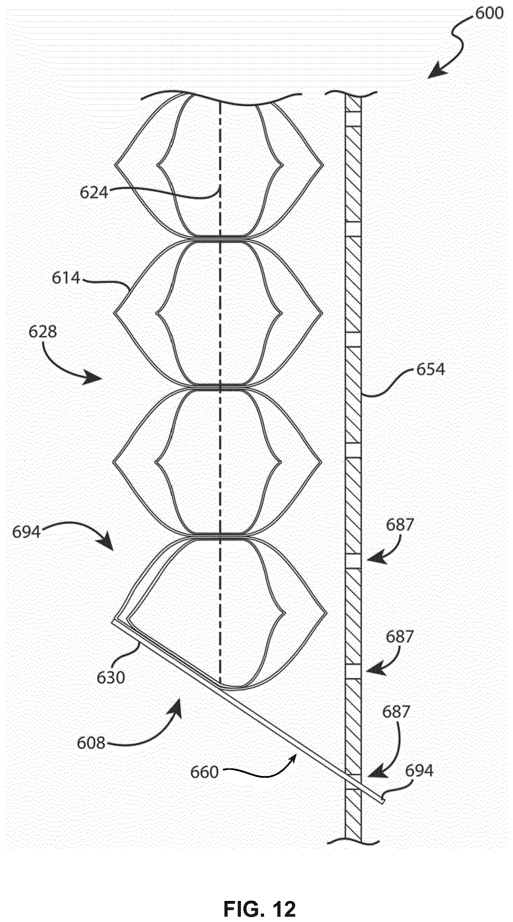

FIGS. 6-12 depict several devices for displaying a sample or sample deck adjacent an architectural opening. The devices allow the user to view materials having different characteristics (such as fabric, color, texture, and the like) in a shade configuration (such as a cellular structure, a single, pleated sheet of material, or other collapsible structures) in a side-by-side relationship adjacent the architectural opening. The devices may hold the deck in front of the architectural opening with one or more covering samples in an expanded or open-cell configuration without manual assistance to allow the user to simultaneously compare multiple covering samples in the same environment or setting. One or more of the covering samples may remain collapsed so the user does not have to look at all of the covering samples at the same time. The user may selectively expand or open the covering samples. FIGS. 6-8B depict a first device. FIGS. 9-10B depict a second device. FIGS. 11 and 12 depict a third device.

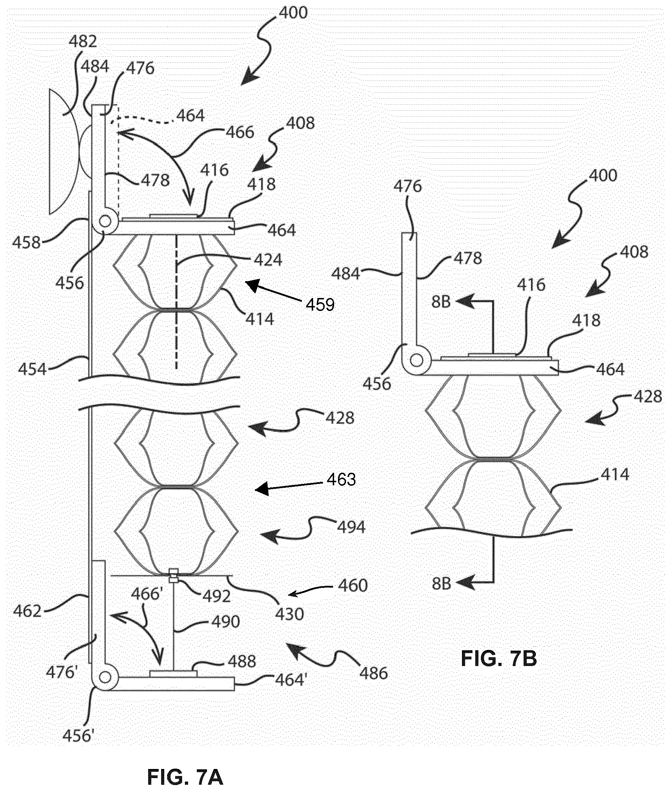

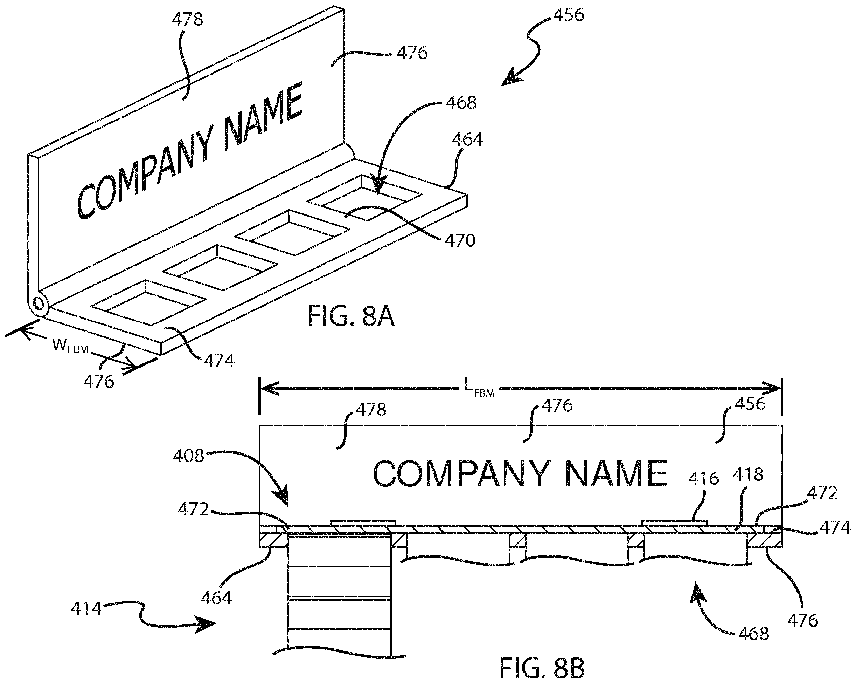

Referring to FIGS. 6-8B, a first device 400 for displaying a sample or sample deck 408 in an architectural opening 450, such as a window opening, is provided. The device 400 may be any desired shape or configuration, such as generally polygonal (e.g., rectangular). The device 400 may include a backing or support structure 454, a bracket 456 associated with an upper portion 458 of the backing 454 and/or an upper portion 459 of one or more covering samples 414, and an extension feature 460 associated with a lower portion 462 of the backing 454 and/or a lower portion 463 of one or more covering samples 414 (see FIG. 7A). The bracket 456 may support the substrate 418 of the deck 408. For instance, the bracket 456 may be associated with the upper portion 458 of the backing 454 for supporting the covering samples 414 side-by-side along a width dimension W_{AO} of an architectural opening. In some embodiments, the extension feature 460 may retain one or more covering samples 414 of the deck 408 in an expanded or open-cell configuration for side-by-side viewing of different properties (e.g. aesthetic and/or functional properties) of the covering samples 414.

Referring to FIGS. 6 and 7A, the backing 454 may space the bracket 456 apart from the extension feature 460 and maintain the spatial relationship between the bracket 456 and the extension feature 460 during use of the device 400. The backing 454 may be substantially planar (for example, planar or within standard manufacturing tolerances for a planar component). The backing 454 may be transparent such that when positioned adjacent an architectural opening, light may pass through the backing 454 onto the covering samples 414. The backing 454 may be made from various types of materials, such as cardstock-weight paper, plastic, or other suitable materials. The backing 454 may be sufficiently rigid such that the backing 454 is not foldable without creasing the substrate 418. The backing 454 may be a single sheet of material (see FIG. 6) or may be multiple strips of material spaced apart from one another along a length of the bracket 456. In some embodiments, the backing 454 is a square sheet of material. In some embodiments, the backing 454 is a sheet of material that is about 12 inches by 12 inches in size. In some embodiments, the backing 454 is a sheet of material that is about 15 inches by 15 inches in size. The thickness of the backing 454 may be less than about one-quarter of an inch. In some embodiments, the thickness of the backing 454 is about one-eighth of an inch or less.

Referring to FIGS. 6-8B, the bracket 456 may include a first bracket member 464 positioned forwardly of the backing 454. The first bracket member 464 may be pivotably coupled to the backing 454. The first bracket member 464 may be pivotable (see arrow 466 in FIG. 7A) between a first position where the first bracket member 464 is oriented transverse to, e.g., substantially perpendicular to, the backing 454 (see FIG. 7A) and a second position where the first bracket member 464 is adjacent, e.g., oriented substantially parallel to, the backing 454 (see dashed line representation of first bracket member 464 in FIG. 7A) in what may be considered a collapsed configuration. In some embodiments, multiple devices 400 may be used simultaneously to display multiple rows of covering samples 414.

Referring to FIGS. 8A and 8B, the first bracket member 464 may define multiple apertures 468 across a length dimension L_{FBM} of the first bracket member 464. In some embodiments, the apertures 468 may be dimensioned to permit passage of the multiple covering samples 414. For example, each aperture 468 may be dimensioned to accommodate a single covering sample 414 (see FIGS. 8A and 8B). The apertures 468 may be separated from one another by bridges 470 extending across a width dimension W_{FBM} of the first bracket member 464 (see FIG. 8A). When the deck 408 is positioned on top of the first bracket member 464, the bridges 470 may extend between the covering samples 414 and abut against the substrate 418 of the deck 408. The substrate 418 may be oversized relative to the apertures 468 so that a peripheral portion 472 of the substrate 418 extending outwardly of the covering samples 414 rests against the first bracket member 464 (see FIG. 8B). In some embodiments, each aperture 468 is dimensioned to accommodate multiple covering samples 414. In some embodiments, the first bracket member 464 defines a single aperture dimensioned to permit passage of all of the covering samples 414 of a deck 408.

With continued reference to FIGS. 8A and 8B, the apertures 468 may be spaced apart from one another along the length dimension L_{FBM} of the first bracket member 464. The apertures 468 may extend through the first bracket member 464 from an upper surface 474 of the first bracket member 464 to a lower surface 476 of the first bracket member 464. When a deck 408 is supported by the first device 400, the substrate 418 of the deck 408 may abut against the upper surface 474 of the first bracket member 464 and the multiple covering samples 414 may extend through the multiple apertures 468.

Referring to FIGS. 6-8B, the bracket 456 may include a second bracket member 476 attached to the backing 454. The second bracket member 476 may be oriented adjacent, such as along or substantially parallel to, the backing 454. The first bracket member 464 may be pivotably attached to the second bracket member 476 so that the first bracket member 464 may be pivoted relative to the second bracket member 476.

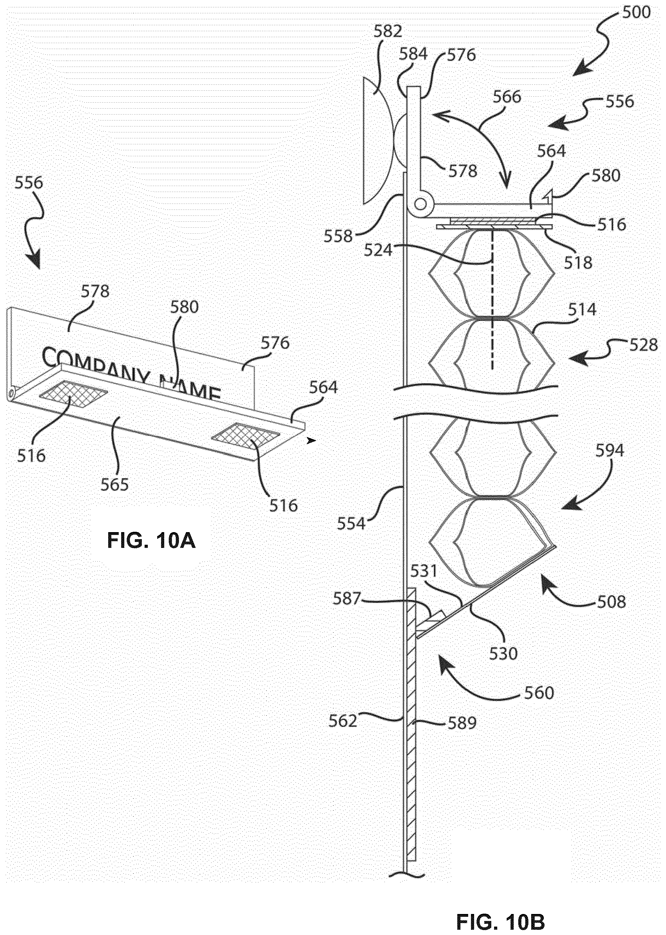

With continued reference to FIGS. 6-8B, the bracket 456 may be foldable between open (or extended) and closed (or collapsed) positions, such as achieved by the pivotable attachment of the first bracket member 464 and the second bracket member 476. In the open position, the first and second bracket members 464, 476 may be oriented transverse to, e.g., substantially perpendicular to, one another. The first bracket member 464 may support the substrate 418 of the deck 408, and a front surface 478 of the second bracket member 476 may be visible to the user. The front surface 478 may include information identifying a distributor, manufacturer, retailer, or other entity associated with the deck 408 so that when the covering samples 414 are displayed by the device 400 the user knows the source of the covering samples 414. In some embodiments, the front surface 478 of the second bracket member 476 includes a company name that manufacturers the covering samples 414. In the closed position, the first and second bracket members 464, 476 may be positioned adjacent, e.g., substantially parallel to, each other. The first bracket member 464 may conceal the front surface 478 of the second bracket member 476. The bracket 456 may include a latch feature 580 (see FIGS. 9 and 10B) to secure the bracket 456 in the closed position. In some embodiments, one of the first and second bracket members 464, 476 includes a latch 580, such as a barbed prong, that is received within a recess formed in the other of the first and second bracket members 464, 476 when the bracket 456 is closed to retain the bracket 456 in the closed position.

The bracket 456 may be attachable to a structure associated with the architectural opening. Referring to FIG. 7A, an attachment feature 482 may be attached to the second bracket member 476. The attachment feature 482 may extend rearwardly from a rear surface 484 of the second bracket member 476. In some embodiments, the attachment feature 482 is one or more suction cups positioned along a length of the second bracket member 476. The suction cups may be attached to a window, for example, to position the device 400 and the covering samples 414 along a room side of the window.

With continued reference to FIG. 7A, the backing 454 may be suspended from the bracket 456. The backing 454 may be attached to the second bracket member 476. In some embodiments, the upper portion 458 of the backing 454 is attached to the rear surface 484 of the second bracket member 476. The backing 454 may be fixedly attached to the second bracket member 476 so that the bracket 456 remains attached to the backing 454 when the device 400 is not being used. The backing 454 may be positioned adjacent the one or more suction cups 482.

Referring to FIGS. 6 and 7A, the extension feature 460 may include a biasing device 486 associated with one or more covering samples 414 to bias the covering samples 414 into an expanded or open configuration. The biasing device 486 may be attached to the device 400 and may be coupled to individual covering samples 414 of the deck 408 to automatically tension the respective covering sample 414. The device 400 may include multiple biasing devices 486. In some embodiments, the device 400 includes a separate biasing device 486 for each covering sample 414 of the deck 408.

With continued reference to FIGS. 6 and 7A, the biasing device 486 may include a housing 488, a retractable element 490, and a connector 492. The housing 488 may be attached to the lower portion 462 of the backing 454 and may enclose a biasing element, such as a spring-biased spool. The retractable element 490 may be extendable from the housing 488 and may be wrappable about the spool. The connector 492 may be attached to a respective covering sample 414. In some embodiments, the connector 492 is attached to a lowermost cellular row 494 of the one or more covering samples 414 (see FIG. 7A). Referring to FIG. 7A, an upper portion 458 of the connector 492 may extend through the cover member 430 and a bottom side of the lowermost cellular row 494. A lower portion 462 of the connector 492 may be positioned beneath the cover member 430. The cover member 430 may include a non-circular opening to permit passage of the connector 492 when the connector 492 is positioned in a first angular position about a longitudinal axis of the retractable element 490 and to prevent passage of the connector 492 when the connector 492 is positioned in a second angular position about the longitudinal axis of the retractable element 490. When the connector 492 is attached to the lowermost cellular row 494 of a covering sample 414, the spring-biased spool may apply a downward force to the lowermost cellular row 494 to extend the covering sample 414 in a vertically-downward direction and retain the covering sample 414 in an expanded or open configuration for a user to view the extended covering sample 414.

As shown in FIGS. 6 and 7A, a separate biasing device 486 may be attached to each covering sample 414 of the deck 408. The biasing device 486 may extend the covering samples 414 in a downward direction to extend the covering samples 414 across the architectural opening 450 so that the user may easily view and compare the different covering samples 414. In FIG. 6, the covering samples 414 have different heights defined along a vector 424 oriented substantially perpendicularly to the substrate 418 of the deck 408 and substantially parallel to the backing 454 of the device 400 (see FIG. 7A). The biasing devices 486 may accommodate the different heights by applying a downward force to each individual covering sample 414a, 414b, 414c, 414d of the deck 408 to extend the individual covering samples to their respective heights. In some embodiments, the biasing device is a weight attached to a cover member of each covering sample to keep the covering sample open.

One or more covering samples 414 of the deck 408 may include mixed opacities. Referring to FIG. 6, the first and second covering samples 414a, 414b include mixed opacities. In particular, an upper portion 420 of the first covering sample 414a is more opaque than a lower portion 422 of the first covering sample 414a. In FIG. 6, the first covering sample 414a is fully extended so that all of the cellular rows are viewable by the user. In contrast, the second covering sample 414b is not fully extended. Rather, the upper portion 420 of the second covering sample 414b is collapsed while the lower portion 422 is expanded.

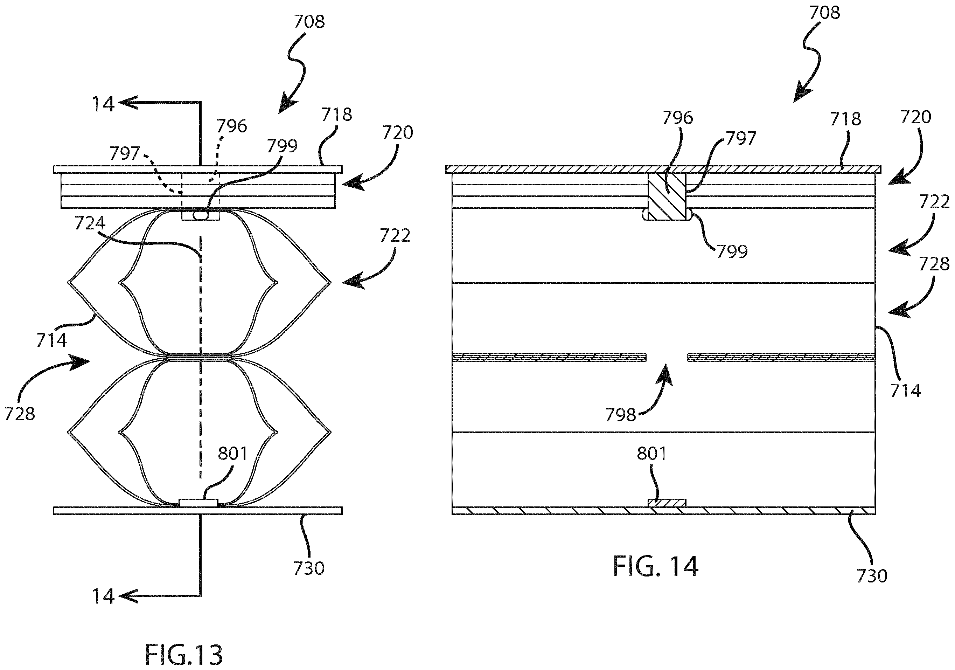

Referring to FIGS. 13 and 14, to retain the upper portion 720 of a covering sample 714 in the collapsed position, the deck 708 may include a retention feature 796. The retention feature 796 may be attached to the substrate 718 and may extend along a vector 724 extending from, e.g., transverse or substantially perpendicularlto, a face of the substrate 718 to which the covering samples 714 are attached. In some embodiments, the retention feature 796 is a post that is interference fit within an aperture 797 formed through a middle portion of the covering samples. Friction between the post 796 and the upper portion 720 of the covering sample 714 may retain the upper portion 720 in a collapsed configuration around the post 796 until a force sufficient to overcome the friction is applied to the upper portion 720. In some embodiments, the aperture 798 formed through the lower portion 722 of the covering sample 714 is larger in dimension than the aperture 797 formed through the upper portion 720. In some embodiments, the biasing device 486 (see FIG. 7A) applies a force to the covering sample 714 that is sufficient to extend and open the lower portion 722 of the covering sample 714 but is not sufficient to overcome the friction between the upper portion 720 of the covering sample 714 and the post 796. In these embodiments, an external force may be required to overcome the friction between the upper portion 720 and the post 796 to expand or open the upper portion 720 of the covering sample 714.

Referring still to FIGS. 13 and 14, in some embodiments a secondary retention feature 799 is positioned transversely through a portion of the post 796 positioned distal to the substrate 718. The secondary retention feature 799 may interfere with the upper portion 720 of the covering sample 714 to retain the upper portion 720 in a collapsed position absent application of an external force sufficient to overcome the interference. In some embodiments, the secondary retention feature 799 may include spring-biased end portions, such as one or more spring-biased ball detents. The post 796 may include a magnetic material that is attracted to a magnet 801 attached to an underside of the cover member 730 for retaining the covering sample 714 in a collapsed position.

Referring back to FIG. 7A, the biasing device 486 may be attached to a bracket 456', which may be referred to as a lower bracket. The bracket 456' maybe substantially identical to the bracket 456 described above. The bracket 456' may include a first bracket member 464' pivotably attached to a second bracket member 476'. The first bracket member 464' may be pivotable (see arrow 466') between an unfolded position in which the first bracket member 464' is oriented substantially perpendicular to the backing 454 and a folded position in which the first bracket member 464' is oriented substantially parallel to the backing 454. The second bracket member 476' may be attached to the lower portion 462 of the backing 454. The second bracket member 476' may be oriented substantially parallel to the backing 454. The housing 488 of the biasing device 486 may be attached to the first bracket member 464' and the retractable element 490 may extend from, e.g., transverse or substantially perpendicular to, the first bracket member 464' and along, e.g., substantially parallel to, the backing 454.

Referring to FIGS. 6-8B, to display multiple covering samples 414 in front of a window, for example, a user may obtain a device 400 including brackets 456, 456' spaced apart from one another by a backing 454, which may be transparent. The user may unfold the brackets 456, 456' so that a first bracket member 464, 464' of each bracket 456, 456' is oriented substantially perpendicularly to the backing 454. The user may obtain a deck 408 including multiple covering samples 414 from a sample book 102 and position the deck 408 on top of the first bracket member 464 of the upper bracket 456 with the covering samples 414 extended downwardly through apertures 468 formed in the first bracket member 464 of the upper bracket 456. The user may attach separate retractable connectors 486 to a lowermost cell 494 of individual covering samples 414 to extend and retain the covering samples 414 into an expanded or open configuration. The user may attach the device 400 to a window, for example, before or after coupling the deck 408 to the device 400.

Referring to FIGS. 9-10B, a second device 500 for displaying a deck in an architectural opening, such as a window opening, is provided. With the exception of the first bracket member 464 and the extension feature 486 illustrated in FIGS. 6-8B, the second device 500 illustrated in FIGS. 9-10B has the same features and operation as the first device 400. Accordingly, the preceding discussion of the features and operation of the first device 400 illustrated in FIGS. 6-8B should be considered equally applicable to the second device 500 illustrated in FIGS. 9-10B, except as noted in the following discussion pertaining to the attachment of the deck 508 to the first bracket member 564 and to the backing 554. The reference numerals used in FIGS. 9-10B correspond to the reference numerals used in FIGS. 6-8B to reflect similar parts and attachments, except the first digit of each reference numeral is incremented by one.

With continued reference to FIGS. 9-10B, the second device 500 may include a backing or support structure 554, a bracket 556 associated with an upper portion 558 of the backing 554, and an extension feature 560 associated with a lower portion 562 of the backing 554. The bracket 556 may support the substrate 518 of a deck 508. The extension feature 560 may retain the covering samples 514 of a deck 508 in an expanded or open configuration in which the covering samples 514 are extended along a vector 524 oriented substantially parallel to the backing 554.

Referring still to FIGS. 9-10B, the deck 508 is positioned beneath the bracket 556. The deck 508 may be attached to an underside of the first bracket member 564 of the bracket 556. The deck 508 and the first bracket member 564 may include corresponding attachment features 516, such as hook and loop fasteners, to secure the deck 508 to the first bracket member 564. As shown in FIG. 10A, one or more attachment features 516 may be attached to a lower surface 565 of the first bracket member 564. As shown in FIGS. 3, 9, and 10B, one or more corresponding attachment features 516 may be attached to the substrate 518 of the deck 508 opposite the covering samples 514. The attachment features 516 attached to the substrate 518 may have a dual function of also attaching the substrate 518 to a page of the sample book 102. When attached to the first bracket member 564, the substrate 518 of the deck 508 may be disposed beneath the first bracket member 564. The substrate 518 may be spaced apart from the first bracket member 564 by the thickness of the corresponding attachment features 516. As shown in 10A, the first bracket member 564 may be solid without any apertures defined therein, in contrast to the first bracket member 464 depicted in FIG. 8A.

Referring to FIGS. 9 and 10B, the extension feature 560 may include a magnet 587 attached to a cover member 530 of a respective covering sample 514. The magnet 587 may be attachable to a magnetic material 589 attached to the lower portion 562 of the backing 554. The magnet 587 may be attached to an underside 531 of the cover member 530 of a respective covering sample 514. The magnetic attraction between the magnet 587 and the magnetic material 589 may be sufficiently strong to maintain the covering sample 514 in an extended position (see FIG. 10B) without manual assistance. A top surface of the cover member 530 may face outwardly to provide the user with information relating to the covering sample 514.

With continued reference to FIGS. 9 and 10B, the magnetic material 589 attached to the lower portion 562 of the backing 554 may constitute a plate of magnetic material 589 attached to a front face of the backing 554. The plate of magnetic material 589 may extend across the entire width of the backing 554. The plate of magnetic material 589 may have a height that is sufficient to accommodate covering samples 514 of different heights (see FIG. 9). The plate of magnetic material 589 may be substantially planar and may be oriented substantially parallel to the backing 554. In some embodiments, the plate of magnetic material 589 is constructed of a metallic material, such as steel. In some embodiments, a magnetic material is embedded in the lower portion 562 of the backing 554.

Referring to FIGS. 9-10B, to display multiple covering samples 514 in front of a window, for example, a user may obtain a device 500 including a backing 554, a bracket 556 attached to the backing 554 along an upper portion of the backing 554, and an extension feature 560 attached to the backing 554 along a lower portion 562 of the backing 554. The user may unfold the bracket 556 so that a first bracket member 564 of the bracket 556 is oriented transverse to, e.g., substantially perpendicular to, the backing 554. The user may obtain a deck 508 including multiple covering samples 514 from a sample book 102 and position the deck 508 below the first bracket member 564 with the covering samples 514 extended downwardly from a substrate 518 of the deck 508. The user may attach the substrate 518 to an underside 565 of the first bracket member 564 with corresponding attachment features 516. The user may grasp a cover member 530 attached to a lowermost cell 594 of a respective covering sample 514 to extend the covering sample 514 into an expanded or open configuration. The user may position the cover member 530 adjacent a magnetic material 589 associated with the lower portion 562 of the backing 554 to magnetically secure the cover member 530 to the magnetic material 589 and retain the covering sample 514 in the expanded or open configuration. The user may attach the device 500 to a window, for example, before or after coupling the deck 508 to the device 500.

Referring to FIGS. 11 and 12, a third device 600 for displaying a deck 608 in an architectural opening, such as a window opening, is provided. With the exception of the backing 454 and the extension feature 486 illustrated in FIGS. 6-8B, the third device 600 illustrated in FIGS. 11 and 12 has the same features and operation as the first device 400. Accordingly, the preceding discussion of the features and operation of the first device 400 illustrated in FIGS. 6-8B should be considered equally applicable to the third device 600 illustrated in FIGS. 11 and 12, except as noted in the following discussion pertaining to the retention of the deck 608 in an extended position. The reference numerals used in FIGS. 11 and 12 correspond to the reference numerals used in FIGS. 6-8B to reflect similar parts and attachments, except the first digit of each reference numeral is incremented by two.

With continued reference to FIGS. 11 and 12, the third device 600 may include a backing or support structure 654, a bracket 656 associated with an upper portion 458 of the backing 654, and an extension feature 660 associated with the backing 654. The bracket 656 may support the substrate 618 of a deck 608. The extension feature 660 may retain one or more covering samples 614 of a deck 608 in an expanded or open configuration.

Referring still to FIGS. 11 and 12, the deck 608 may be supported by the first bracket member 664 of the bracket 656. The substrate 618 of the deck 608 may be coupled to, e.g., abut against an, upper surface of the first bracket member 664 to suspend the covering samples 614 in front of the backing 654. As shown in FIG. 11, the substrate 618 of the deck 608 may be disposed above the first bracket member 664. The covering samples 614 may extend through apertures 668 formed in the first bracket member 664. The apertures 668 may be similar to the apertures 468 defined in the first bracket member 464 described above with reference to FIG. 8A. In FIG. 11, the second and fourth covering samples 614b, 614d are shown in a collapsed position in which the covering samples 614b, 614d are collapsed and a cover member 630 attached to a lowermost cell of the covering samples 614b, 614d is positioned beneath the first bracket member 664 for grasping by the user. In FIG. 11, the first and third covering samples 614a, 614c are shown in an extended position in which the covering samples 614a, 614c are expanded beneath the first bracket member 664 for viewing by the user.

Referring to FIGS. 11 and 12, the extension feature 660 may include multiple slits 687 defined in the backing 654. The slits 687 may be arranged in multiple columns 689 spaced apart from one another along the width W_{B} of the backing 654. Each column 689 of slits 687 may be arranged in line with the covering sample 614 of the deck 608. The slits 687 in each column 689 may be oriented substantially horizontally (for example horizontally or within 10 degrees of horizontal) and may be spaced vertically along a vector 624 oriented substantially perpendicularly to the substrate 618 of the deck 608. The slits 687 may be sized to receive a portion of the cover member 630 attached to a respective covering sample 614 to retain the cover member 630 in the slit 687 and thus retain the covering sample 614 in the extended position. As shown in FIG. 12, a portion of the cover member 630 may be interference or friction fit within a slit 687 to retain the covering sample 614 in the extended position. An upper side of the cover member 630 may face outwardly to show identifying information, such as a color name, a fabric code, or the like.

Referring to FIGS. 11-12, to display multiple covering samples 614 in front of a window, for example, a user may obtain a device 600 including a backing 654, a bracket 656 attached to the backing 654 along an upper portion of the backing 654, and an extension feature 660 formed in the backing 654. The user may unfold the bracket 656 so that a first bracket member 664 of the bracket 656 is oriented transverse to, e.g., substantially perpendicular to, the backing 654. The user may obtain a deck 608 including multiple covering samples 614 from a sample book 102 and may position the deck 608 on top of the first bracket member 664 with the covering samples 614 extended downwardly through the apertures 668 formed in the first bracket member 664 (see FIG. 11). The user may grasp a cover member 630 attached to a lowermost cell 694 of a respective covering sample 614 to extend the covering sample 614 into an expanded or open configuration. The user may position the cover member 630 adjacent the backing 654 and may insert a portion of the cover member 630, such as a tab 644, through a slit 687 formed in the backing 654 to secure the cover member 630 to the backing 654 and retain the covering sample 614 in the expanded or open configuration. The user may attach the device 600 to a window, for example, before or after coupling the deck 608 to the device 600.

Referring to FIGS. 6-14, a method of displaying multiple covering samples 114, 214, 314, 414, 514, 614 is provided. A user may couple a substrate 118, 218, 318, 418, 518, 618 to a bracket 456, 556, 656. For example, the user may rest the substrate 118, 218, 318, 418, 518, 618 on a support surface of the bracket 456, 556, 656 or attach the substrate 118, 218, 318, 418, 518, 618 to a lower surface of the bracket 456, 556, 656. The user may unfold the bracket 456, 556, 656 prior to coupling the substrate 118, 218, 318, 418, 518, 618 to the bracket 456, 556, 656. The user may position the bracket 456,556,656 within an architectural opening so that the multiple covering samples of the sample deck 108, 208, 308, 408, 508, 608 are positioned side-by-side along a width dimension W_{AO} of the architectural opening 350. In some embodiments, the user may position a sample deck 108, 208, 308, 408, 508, 608 with multiple covering samples coupled thereto within an architectural opening so that the multiple covering samples are positioned side-by-side along a width dimension W_{AO} of the architectural opening 350. The user may extend one or more covering samples into an extended position to view the extended covering samples side-by-side to compare the front surfaces thereof which serve to extend across the architectural opening 350 to cover the architectural opening 350. In some embodiments, the user may extend one or more covering samples of the sample deck 108, 208, 308, 408, 508, 608 in a vertically-downward direction to an extended position. For example, the user may extend the one or more covering samples through one or more apertures 468, 668 formed in the bracket. The user may retain the one or more covering samples in the extended position with an extension feature 460, 560, 660. For example, the user may apply a downward force on the one or more covering samples with a retractable element 490 attached to a lowermost cell 494 of the one or more covering samples, magnetically secure a portion of the one or more covering samples to a magnetic material 589 associated with a backing 554 attached to the bracket 556, or snugly insert a cover member 630 attached to the one or more covering samples through a slit 687 formed in a backing 654 attached to the bracket 656.

The foregoing description has broad application. While the provided illustrative embodiments include a cellular-type shade, it should be appreciated that the concepts disclosed herein may equally apply to many types of shades. Additionally, or alternatively, while the provided embodiments generally include four covering samples per deck, it should be appreciated more or less covering samples may be included per deck. For example, more or less covering samples may be included to provide a color palette of choices along with different types of materials. Additionally, or alternatively, while the provided embodiments generally describe the display device in connection with a window, the display device may be applicable in other architectural openings, such as door openings, archways, and the like. The scope of the invention is defined by the following claims.

## Claims

1. A sample deck (108, 208, 308, 408, 508, 608, 708) comprising:
a substrate (218) having a height dimension and a length dimension that is larger than the height dimension; and
a plurality of covering samples (214) each including a front surface configured to extend across an opening, said plurality of covering samples (214) attached to said substrate (218) in a side-by-side arrangement along the length dimension of said substrate (218) for side-by-side extension of said plurality of covering samples (214) and side-by-side viewing of said front surfaces of said plurality of covering samples (214) in an environment in which a covering represented by one or more of said plurality of covering samples (214) is to be placed, said front surface of each of said plurality of covering samples (214) extending along at least a portion of the length dimension of said substrate (218);
wherein each covering sample (214) is independently movable between a collapsed position and an expanded position.

2. The sample deck of claim 1, wherein each covering sample (214) is expandable away from said substrate (218) and collapsible towards said substrate (218).

3. The sample deck of claim 1 or 2, wherein each covering sample (214) includes a cover member (230) identifying the respective covering sample (214), wherein each covering sample (214) maybe positioned between said substrate (218) and said cover member (230) along a vector (224) extending away from said substrate (218).

4. The sample deck of claim 1, 2 or 3, wherein at least two covering samples (214) have different lengths when fully extended.

5. The sample deck of any proceeding claim, further comprising a retention feature attached to said substrate (218) and associated with said plurality of covering samples (214), wherein said retention feature may comprise a post that is interference fit within an aperture formed through a portion of said plurality of covering samples (214).

6. A device (400) in combination with a sample deck according to any preceding claim for displaying the plurality of covering samples (404) within an architectural opening (450), said device comprising:
a support structure (454);
a bracket (456) associated with an upper portion of said support structure (454) for supporting the plurality of covering samples (414) side-by-side along a width dimension of the architectural opening (450); and
an extension feature (460) associated with a lower portion of said support structure (454) for retaining one or more covering samples (414) in an extended position for side-by-side viewing of different properties of the covering samples (414).

7. The device of claim 6, wherein said bracket comprises a first bracket member (464) extending forwardly from said support structure (454).

8. The device of claim 7, wherein said first bracket member (464) one or both of pivotably coupled to said support structure (454), and pivotable between a first position where said first bracket member (464) extends away from said support structure (454), and a second position where said first bracket member (464) is adjacent to said support structure (454).

9. The device of claim 7 or 8, wherein said first bracket member (464) defines multiple apertures (468) dimensioned to permit passage of said plurality of covering samples (414).

10. The device of claim 7, 8 or 9, wherein said bracket (454) further comprises a second bracket member (476) attached to said support structure (454), and said first bracket member (464) may be pivotably attached to said second bracket member (476).

11. The device of any one of claims 6 to 10, wherein said extension feature (460) comprises a lower bracket (456') associated with said lower portion of said support structure (454), and said lower bracket (456') may be adjustable relative to said support structure (454).

12. The device of any one of claims 6 to 11, wherein said extension feature (660) comprises multiple slits (687) defined in said support structure (654).

13. The device of any one of claims 6 to 12, wherein said extension feature comprises a biasing device (486) associated with one or more covering samples (414), and said extension feature further may comprise a bracket (456') attached to said lower portion of said support structure (454), said biasing device being attached to said bracket (456').

14. The device of any one of claims 6 to 13, wherein said extension feature comprises a magnet (801) attached to at least one covering sample, and said extension feature may further comprise a magnetic material attached to said lower portion of said support structure (454).

15. A method of displaying multiple covering samples, the method comprising:
positioning a sample deck according to any one of claims 1 to 6 within an architectural opening so that the multiple covering samples are positioned side-by-side along a width dimension of the architectural opening; and
extending one or more covering samples of the multiple covering samples into an extended position to view the extended covering samples side-by-side to compare the front surfaces thereof which serve to extend across the architectural opening to cover the architectural opening.

## Patentansprüche

1. Musterdeck (108, 208, 308, 408, 508, 608, 708), umfassend:
einen Träger (218), der ein Höhenmaß und ein Längenmaß hat, das größer als das Höhenmaß ist; und
eine Vielzahl Abdeckungsmuster (214), wobei jedes eine Frontfläche beinhaltet, die konfiguriert ist, um sich über eine Öffnung zu erstrecken, wobei die Vielzahl Abdeckungsmuster (214) nebeneinander entlang des Längenmaßes des Trägers (218) angeordnet an dem Träger (218) befestigt sind für eine nebeneinander angeordnete Erstreckung der Vielzahl Abdeckungsmuster (214) und eine nebeneinander angeordnete Darstellung der Frontflächen der Vielzahl Abdeckungsmuster (214) in einer Umgebung, in der eine Abdeckung, die durch eine oder mehr der Vielzahl Abdeckungsmuster (214) dargestellt wird, angeordnet werden soll, wobei sich die Fronfläche jeder der Vielzahl Abdeckungsmuster (214) entlang mindestens eines Teils des Längenmaßes des Trägers (218) erstreckt;
wobei jedes Abdeckungsmuster (214) unabhängig zwischen einer eingefahrenen Position und einer ausgefahrenen Position beweglich ist.

2. Musterdeck nach Anspruch 1, wobei jedes Abdeckungsmuster (214) von dem Träger (218) weg ausgeklappt werden kann und zu dem Träger (218) hin zusammengeklappt werden kann.

3. Musterdeck nach Anspruch 1 oder 2, wobei jedes Abdeckungsmuster (214) ein Abdeckelement (230) beinhaltet, das das jeweilige Abdeckungsmuster (214) kennzeichnet, wobei jedes Abdeckungsmuster (214) zwischen dem Träger (218) und dem Abdeckelement (230) entlang eines Vektors (224), der sich von dem Träger (218) weg erstreckt, positioniert werden kann.

4. Musterdeck nach Anspruch 1, 2 oder 3, wobei mindestens zwei Abdeckungsmuster (214) verschiedene Längen haben, wenn sie vollständig ausgeklappt sind.

5. Musterdeck nach einem der vorgehenden Ansprüche, ferner umfassend eine Rückhaltefunktion, die an dem Träger (218) befestigt ist und der Vielzahl Abdeckungsmuster (214) zugeordnet ist, wobei die Rückhaltefunktion eine Stütze umfassen kann, die in Presspassung innerhalb einer Öffnung ist, die durch einen Teil der Vielzahl Abdeckungsmuster (214) geformt wird.

6. Vorrichtung (400) in Kombination mit einem Musterdeck nach einem vorgehenden Anspruch zur Darstellung der Vielzahl Abdeckungsmuster (404) innerhalb einer architektonischen Öffnung (450), wobei die Vorrichtung Folgendes umfasst:
eine Stützstruktur (454);
eine Halterung (456), die mit einem oberen Teil der Stützstruktur (454) assoziiert ist, um die Vielzahl Abdeckungsmuster (414) nebeneinander entlang eines Breitenmaßes einer architektonischen Öffnung (450) zu stützen; und
eine Erweiterungsfunktion (460), die mit einem unteren Teil der Stützstruktur (454) assoziiert ist, um ein oder mehrere Abdeckungsmuster (414) in einer ausgeklappten Position für eine nebeneinander angeordnete Darstellung verschiedener Merkmale der Abdeckungsmuster (414) zu halten.

7. Vorrichtung nach Anspruch 6, wobei die Halterung ein erstes Halterungselement (464) umfasst, das sich nach vorne von der Stützstruktur (454) weg erstreckt.

8. Verfahren nach Anspruch 7, wobei das erste Halterungselement (464) eines oder beides schwenkbar mit der Stützstruktur (454) verbunden ist, und zwischen einer ersten Position, in der sich das erste Halterungselement (464) weg von der Stützstruktur (454) erstreckt, und einer zweiten Position, in der das erste Halterungselement (464) neben der Stützstruktur (454) liegt, schwenkbar ist.

9. Vorrichtung nach Anspruch 7 oder 8, wobei das erste Halterungselement (464) mehrere Öffnungen (468) definiert, die so dimensioniert sind, dass der Vielzahl Abdeckungsmuster (414) ein Durchgang ermöglich wird.

10. Vorrichtung nach Anspruch 7, 8 oder 9, wobei die Halterung (454) ferner ein zweites Halterungselement (476) umfasst, das an der Stützstruktur (454) befestigt ist, und das erste Halterungselement (464) schwenkbar an dem zweiten Halterungselement (476) befestigt werden kann.

11. Vorrichtung nach einem der Ansprüche 6 bis 10, wobei die Erweiterungsfunktion (460) eine untere Halterung (456') umfasst, die mit dem unteren Teil der Stützstruktur (454) assoziiert ist, und die untere Halterung (456') relativ zu der Stützstruktur (454) verstellt werden kann.

12. Vorrichtung nach einem der Ansprüche 6 bis 11, wobei die Erweiterungsfunktion (660) mehrfache Schlitze (687) umfasst, die in der Stützstruktur (654) definiert sind.

13. Vorrichtung nach einem der Ansprüche 6 bis 12, wobei die Erweiterungsfunktion eine Vorspannvorrichtung (486) umfasst, die mit einem oder mehreren Abdeckungsmustern (414) assoziiert ist, und die Erweiterungsfunktion ferner eine Halterung (456') umfassen kann, die an dem unteren Teil der Stützstruktur (454) befestigt ist, wobei die Vorspannvorrichtung an der Halterung (456') befestigt ist.

14. Vorrichtung nach einem der Ansprüche 6 bis 13, wobei die Erweiterungsfunktion einen Magneten (801) umfasst, der an mindestens einem Abdeckungsmuster befestigt ist, und die Erweiterungsfunktion ferner ein magnetisches Material umfassen kann, das an dem unteren Teil der Stützstruktur (454) befestigt ist.

15. Verfahren zur Darstellung mehrerer Abdeckungsmuster, wobei das Verfahren Folgendes umfasst:
Positionieren eines Musterdecks nach einem der Ansprüche 1 bis 6 innerhalb einer architektonischen Öffnung, sodass die mehreren Abdeckungsmuster nebeneinander entlang eines Breitenmaßes einer architektonischen Öffnung positioniert sind; und
Erweitern eines oder mehrerer Abdeckungsmuster der mehreren Abdeckungsmuster in eine erweiterte Position, um die ausgeklappten Abdeckungsmuster nebeneinander zu sehen, um die Frontflächen davon zu vergleichen, die dazu dienen, sich über die architektonische Öffnung zu erstrecken, um die architektonische Öffnung abzudecken.

## Revendications

1. Plateau pour échantillons (108, 208, 308, 408, 508, 608, 708) comprenant :
un substrat (218) ayant une dimension de hauteur et une dimension de longueur qui est supérieure à la dimension de hauteur ; et
une pluralité d'échantillons de revêtement (214), chacun comprenant une surface avant conçue pour s'étendre à travers une ouverture, ladite pluralité d'échantillons de revêtement (214) fixés audit substrat (218) dans un agencement côte à côte sur la longueur dudit substrat (218) en vue d'une extension côte à côte de ladite pluralité d'échantillons de revêtement (214) et une visualisation côte à côte desdites surfaces avant de ladite pluralité d'échantillons de revêtement (214) dans un environnement dans lequel un revêtement représenté par au moins un échantillon de ladite pluralité d'échantillons de revêtement (214) doit être placé, ladite surface avant de chacun de ladite pluralité de d'échantillons de revêtement (214) s'étendant le long au moins d'une partie de la dimension de longueur dudit substrat (218) ;
chaque échantillon de revêtement (214) pouvant être déplacé de manière indépendante entre une position repliée et une position déployée.

2. Plateau pour échantillons selon la revendication 1, dans lequel chaque échantillon de revêtement (214) peut être étendu à distance dudit substrat (218) et peut être replié vers ledit substrat (218).

3. Plateau pour échantillons selon la revendication 1 ou 2, dans lequel chaque échantillon de revêtement (214) comprend un élément de recouvrement (230) identifiant l'échantillon de revêtement respectif (214), chaque élément de revêtement (214) pouvant être positionné entre ledit substrat (218) et ledit élément de revêtement (230) le long d'un vecteur (224) s'étendant depuis ledit substrat (218).

4. Plateau pour échantillons selon la revendication 1, 2 ou 3, dans lequel au moins deux échantillons de revêtement (214) présentent différentes longueurs lorsqu'ils sont entièrement étendus.

5. Plateau pour échantillons selon l'une quelconque des revendications précédentes, comprenant en outre un élément de rétention fixé au dit substrat (218) et associé à ladite pluralité d'échantillons de revêtement (214), ledit élément de rétention pouvant comprendre un montant qui est ajusté serré à l'intérieur d'un orifice formé à travers une partie de ladite pluralité d'échantillons de revêtement (214).

6. Dispositif (400) en combinaison avec un plateau pour échantillons selon l'une quelconque des revendications précédentes destiné à afficher la pluralité d'échantillons de revêtement (404) à l'intérieur d'une ouverture architecturale (450), ledit dispositif comprenant :
une structure de support (454) ;
un support (456) associé à une partie supérieure de ladite structure de support (454) destiné à supporter la pluralité d'échantillons de revêtement (414) côte à côte dans le sens de la largeur de l'ouverture architecturale (450) ; et
un élément d'extension (460) associé à une partie inférieure de ladite structure de support (454) destiné à retenir au moins un échantillon de revêtement (414) dans une position étendue en vue d'une visualisation côte à côte de différentes propriétés des échantillons de revêtement (414).

7. Dispositif selon la revendication 6, dans lequel ledit support comprend un premier élément de support (464) s'étendant vers l'avant depuis ladite structure de support (454).

8. Dispositif selon la revendication 7, dans lequel ledit premier élément de support (464) au moins un des deux couplé pivotant à ladite structure de support (454) et pouvant pivoter entre une première position où ledit premier élément de support (464) s'étend à distance de ladite structure de support (454) et une deuxième position où ledit premier élément de support (464) est adjacent à ladite structure de support (454).

9. Dispositif selon la revendication 7 ou 8, dans lequel ledit premier élément de support (464) définit de multiples orifices (468) dimensionnés de manière à permettre le passage de ladite pluralité d'échantillons de revêtement (414).

10. Dispositif selon la revendication 7, 8 ou 9, dans lequel ledit support (454) comprend en outre un deuxième élément de support (476) fixé à ladite structure de support (454) et ledit premier élément de support (464) peut être fixé pivotant audit deuxième élément de support (476).

11. Dispositif selon l'une quelconque des revendications 6 à 10, dans lequel ledit élément d'extension (460) comprend un support inférieur (456') associé à ladite partie inférieure de ladite structure de support (454) et ledit support inférieur (456') peut être ajusté par rapport à ladite structure de support (454).

12. Dispositif selon l'une quelconque des revendications 6 à 11, dans lequel ledit élément d'extension (660) comprend de multiples fentes (687) définies dans ladite structure de support (654).

13. Dispositif selon l'une quelconque des revendications 6 à 12, dans lequel ledit élément d'extension comprend un dispositif de sollicitation (486) associé à au moins un échantillon de revêtement (414) et ledit élément d'extension peut comprendre en outre un support (456') fixé à ladite partie inférieure de ladite structure de support (454), ledit dispositif de sollicitation étant fixé audit support (456').

14. Dispositif selon l'une quelconque des revendications 6 à 13, dans lequel ledit élément d'extension comprenant un aimant (801) fixé à au moins un échantillon de revêtement et ledit élément d'extension peut comprendre un matériau magnétique fixé à ladite partie inférieure de ladite structure de support (454).

15. Procédé d'affichage de multiples échantillons de revêtement, le procédé comprenant :
le positionnement d'un plateau pour échantillons selon l'une quelconque des revendications 1 à 6 à l'intérieur d'une ouverture architecturale de manière que les multiples échantillons de revêtement sont positionnés côte à côte dans le sens de la largeur de l'ouverture architecturale ; et
l'extension d'au moins un échantillon de revêtement des multiples échantillons de revêtement dans une position étendue pour visualiser les échantillons de revêtement étendus côte à côte afin de comparer les surfaces avant de ceux-ci qui servent à s'étendre par l'ouverture architecturale pour recouvrir l'ouverture architecturale.
